# FASCICULE DE BREVET EUROPEEN

(11) **EP 3 092 382 B1**
(45) Date de publication et mention de la délivrance du brevet: **21.02.2018**
(21) Numéro de dépôt: 14809918.7
(22) Date de dépôt: 14.11.2014
(51) Int. Cl.: B60K 6/485, F02B 41/10, F01N 3/021, F02B 37/013, F02M 26/00, F01N 3/08, F01N 5/04, F02M 35/10, F02B 29/04

(54) **LIGNE D'ÉCHAPPEMENT DE MOTEUR À COMBUSTION INTERNE ET MOTEUR À COMBUSTION INTERNE COMPORTANT UNE TELLE LIGNE D'ÉCHAPPEMENT**
ABGASSTRANG EINES VERBRENNUNGSMOTORS UND VERBRENNUNGSMOTOR MIT EINEM SOLCHEN ABGASSTRANG
EXHAUST GAS LINE OF AN INTERNAL COMBUSTION ENGINE AND INTERNAL COMBUSTION ENGINE WITH SUCH AN EXHAUST GAS LINE

(30) Priorité: 13.12.2013 FR 1362619
(43) Date de publication de la demande: 16.11.2016
(73) Titulaire: Renault S.A.S., 92100 Boulogne-Billancourt (FR)
(72) Inventeur: EMERY, Pascal, F-91120 Palaiseau (FR); DER-MATHEOSSIAN, Jean-Yves, F-75005 Paris (FR)
(86) Numéro de dépôt international: PCT/FR2014/052901
(87) Numéro de publication internationale: WO 2015/086935

(56) Documents cités:
- DE-A1-102011 108 204
- DE-A1-102012 004 394
- FR-A1- 2 958 325
- US-A1- 2011 094 485

## Description

### DOMAINE TECHNIQUE AUQUEL SE RAPPORTE L'INVENTION

La présente invention concerne de manière générale la réduction des émissions polluantes et l'amélioration du rendement dans les moteurs à combustion interne, par exemple pour véhicules automobiles.

Elle concerne plus particulièrement une ligne d'échappement de gaz brûlés pour moteur à combustion interne comprenant une turbine d'un turbocompresseur, une turbine d'un système de turbo-récupération disposée à l'aval de la turbine du turbocompresseur dans la ligne d'échappement, et un élément de jonction permettant le branchement d'une ligne de recirculation des gaz brûlés et disposé entre la turbine du turbocompresseur et la turbine du système de turbo-récupération.

Elle concerne également un moteur à combustion interne comportant notamment une ligne d'échappement des gaz brûlés.

### ARRIERE-PLAN TECHNOLOGIQUE

Le document JP 2005-069 092 décrit une ligne d'échappement telle que définie ci-dessus. Ce document propose en outre de placer un dispositif de post-traitement, en l'occurrence un catalyseur d'oxydation, immédiatement en sortie du moteur, et donc à l'amont de la turbine du turbocompresseur, afin d'améliorer l'efficacité de l'oxydation au démarrage du moteur.

Toutefois, selon cette conception, une partie importante de l'énergie présente en sortie du moteur est perdue du fait de la détente des gaz dans le dispositif de post-traitement et n'est donc pas disponible pour la suralimentation.

On connait par ailleurs du document DE 10 2011 108 204 ou du document US 2011/094 485 un moteur à combustion interne comprenant dans sa ligne d'échappement une remière turbine, une dispositif de post-traitement, un élément de jonction vers une ligne de recirculation et une seconde turbine.

### OBJET DE L'INVENTION

Dans ce contexte, on propose selon l'invention une ligne d'échappement telle que définie en introduction, dans laquelle un dispositif de post-traitement est interposé entre la turbine du turbocompresseur et l'élément de jonction et dans laquelle le système de turbo-récupération comprend une machine électrique réversible.

Grâce à cette disposition des différents éléments, la pression reste élevée dans la turbine du turbocompresseur (précisément du fait de sa situation à l'amont du dispositif post-traitement) ; le dispositif de post-traitement reste toutefois en amont de la conduite de recirculation, ce qui permet d'obtenir la recirculation de gaz plus froids (grâce à leur détente dans le dispositif de post-traitement), de concentration augmentée, et on aboutit ainsi à une meilleure recirculation.

La contre-pression rendue nécessaire par la disposition de la conduite de recirculation à l'aval du dispositif de post-traitement est quant à elle réalisée par la turbine du système de turbo-récupération, ce qui permet une récupération d'énergie, par exemple sous forme d'énergie électrique.

On obtient un rendement élevé et des émissions polluantes réduites.

D'autres caractéristiques optionnelles (donc non limitatives) et avantageuses de la ligne d'échappement conforme à l'invention sont les suivantes :
- le système de turbo-récupération est un système turbogénérateur, ce qui permet de récupérer une partie de la pression des gaz d'échappement sous forme d'énergie électrique ;
- le système turbogénérateur est connecté à des moyens de stockage conçus pour stocker l'énergie électrique fournie par le système turbogénérateur ;
- une machine électrique conçue pour contribuer, dans au moins un mode de fonctionnement de la machine électrique, à la propulsion du véhicule est alimentée par l'énergie électrique produite par le système turbogénérateur ;
- un compresseur électrique est alimenté par l'énergie électrique produite par le système turbogénérateur ;
- un circuit de dérivation comprenant une vanne est branché en parallèle de la turbine du système de turbo-récupération

L'invention propose également un moteur à combustion interne comportant :
- un bloc-moteur qui délimite au moins une chambre de combustion,
- une ligne d'admission d'air frais dans chaque chambre de combustion,
- un circuit d'injection de carburant dans la ligne d'admission ou dans chaque chambre de combustion,

- une ligne d'échappement des gaz brûlés hors de chaque chambre de combustion telle que proposée ci-dessus, et
- une ligne de recirculation branchée, d'un côté, audit élément de jonction et, de l'autre côté, à la ligne d'admission.

La ligne d'admission peut alors comprendre un compresseur du turbocompresseur.

Le moteur peut par ailleurs comprendre un dispositif électrique, qui peut être alimenté, dans au moins un mode de son fonctionnement, par l'énergie électrique produite par le système turbogénérateur.

### DESCRIPTION DETAILLEE D'UN EXEMPLE DE REALISATION

La description qui va suivre en regard du dessin annexé, donné à titre d'exemple non limitatif, fera bien comprendre en quoi consiste l'invention et comment elle peut être réalisée.

Sur le dessin annexé, l'unique figure est une vue schématique d'un moteur à combustion interne comprenant une ligne d'échappement de gaz brûlés conforme aux enseignements de l'invention.

Dans la description, les termes « amont » et « aval » seront utilisés suivant le sens de l'écoulement des gaz, depuis le point de prélèvement de l'air frais dans l'atmosphère jusqu'à la sortie des gaz brûlés dans l'atmosphère.

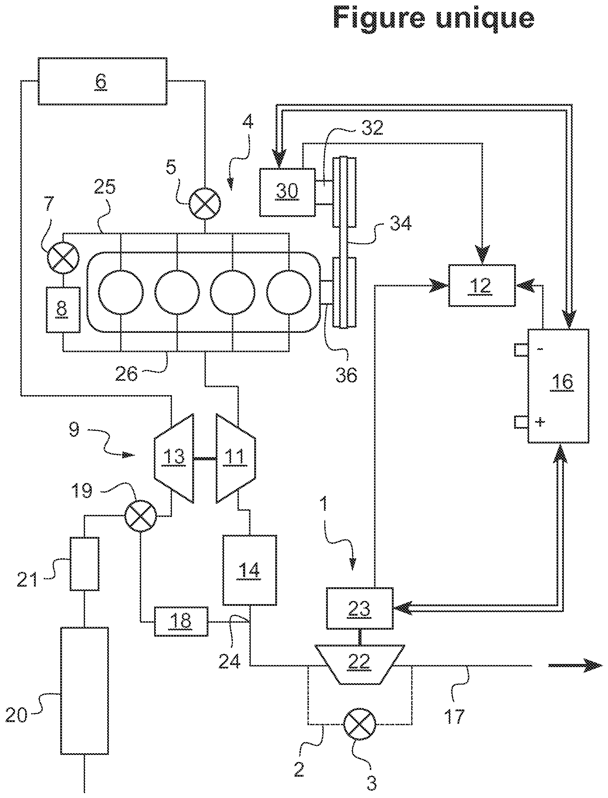

Sur la figure 1, on a représenté schématiquement un moteur à combustion interne 4 de véhicule automobile, qui comprend un bloc-moteur pourvu d'un vilebrequin et de quatre pistons (non représentés) logés dans quatre cylindres (schématiquement représentés), qui forment des chambres de combustion. Ce moteur est ici à allumage par compression (Diesel). Il pourrait également être à allumage commandé (Essence).

En amont des cylindres, le moteur à combustion interne 4 comporte une ligne d'admission qui prélève l'air frais dans l'atmosphère et qui débouche dans un répartiteur d'air 25 agencé pour répartir l'air vers chacun des quatre cylindres.

Cette ligne d'admission comporte ici, dans le sens d'écoulement de l'air frais, un filtre à air 20 qui filtre l'air frais prélevé dans l'atmosphère, un débitmètre 21 qui mesure le débit d'air frais entrant, un compresseur 13 d'un turbocompresseur 9 qui comprime l'air frais filtré par le filtre à air 20, un refroidisseur d'air de suralimentation 6 qui refroidit cet air frais comprimé, et une vanne d'admission 5 qui permet de réguler le débit d'air frais débouchant dans le répartiteur d'air 25.

La ligne d'admission comprend également, entre le débitmètre 21 et le compresseur 13, une vanne de recirculation basse-pression 19 (ou vanne EGR basse-pression, selon l'acronyme anglo-saxon pour *"Exhaust Gas Recirculation"*) qui vise à réintroduire une partie des gaz brûlés dans la ligne d'admission, comme expliqué plus loin.

En sortie des cylindres, le moteur à combustion interne comporte une ligne d'échappement qui s'étend depuis un collecteur d'échappement 26 (dans lequel débouchent les gaz qui ont été préalablement brûlés dans les cylindres) jusqu'à un silencieux d'échappement 17 permettant de détendre les gaz brûlés avant qu'ils ne soient évacués dans l'atmosphère. La ligne d'échappement comporte généralement au moins un dispositif de dépollution des gaz (non représenté sur la figure).

La ligne d'échappement comporte, dans le sens d'écoulement des gaz brûlés, une turbine 11 du turbocompresseur 9, un dispositif de post-traitement 14 et une turbine 22 d'un système turbogénérateur 1 (ou "*turbo-compound*" électrique selon l'appellation fréquemment utilisée).

Le dispositif de post-traitement 14 est conçu pour décomposer différentes espèces polluantes présentes dans les gaz brûlés en composés neutres pour la santé et/ou pour stocker les suies contenues dans ces gaz en vue de leur combustion périodique. Le dispositif de post-traitement comprend par exemple un catalyseur d'oxydation et/ou un filtre à particules et/ou un piège à oxydes d'azote (ou piège à NOx) et/ou un catalyseur de réduction sélective des oxydes d'azote, dit aussi catalyseur SCR (acronyme pour *"selective catalytic reduction*")*.*

La turbine 11 du turbocompresseur 9 est entraînée en rotation par le flux de gaz brûlés sortant du collecteur d'échappement 26 et permet d'entraîner en rotation le compresseur 13 déjà mentionné, grâce à des moyens de couplage mécanique tels qu'un arbre de transmission.

De même, la turbine 22 du système turbogénérateur 1 est entraînée en rotation par le flux de gaz brûlés et entraîne une machine électrique 23, ici une génératrice électrique, éventuellement réversible, du système turbogénérateur 1.

L'énergie électrique produite par la rotation de la machine électrique 23 (entraînée par la turbine 22 du système turbogénérateur 1 et utilisée en tant que génératrice) est stockée dans un système de stockage d'énergie électrique 16, par exemple une batterie ou un dispositif à super-capacités.

Selon un mode de réalisation possible, la turbine 22 du système turbogénérateur peut avoir une géométrie variable, telle que des ailettes à position variable (par exemple en fonction d'une commande reçu d'un boîtier de commande ou calculateur 12, dont le fonctionnement sera présenté plus bas) ; il est ainsi possible d'ajuster la contre-pression produite par la turbine 22 et de moduler la quantité d'énergie électrique récupérée par la machine électrique 23.

Selon une variante envisageable, la ligne d'échappement peut comprendre en outre un circuit de dérivation 2 du système turbogénérateur 1 qui s'étend en parallèle de la turbine 22 du système turbogénérateur 1 et comporte une vanne de dérivation 3 qui permet de réguler la proportion des gaz brûlés qui passe dans la turbine 22 du système turbogénérateur 1.

Deux circuits de recirculation des gaz brûlés sont par ailleurs prévus :
- un premier circuit de recirculation s'étend du collecteur d'échappement 26 au répartiteur d'air 25 et comprend, dans ce sens, un refroidisseur d'air de recirculation haute-pression 8 et une vanne de recirculation (ou vanne EGR) haute-pression 7 ;
- un second circuit de recirculation s'étend depuis un élément de jonction 24 de la ligne d'échappement situé entre le dispositif de post-traitement 14 et la turbine 22 du système turbogénérateur 1 jusqu'à la vanne de recirculation basse-pression 19 déjà mentionnée.

L'énergie électrique stockée dans le système de stockage 16 peut être utilisée pour entraîner un appareil électrique (par exemple une machine électrique) utile au fonctionnement du groupe motopropulseur, par exemple pour aider à la propulsion du véhicule automobile :
On peut prévoir par exemple, comme visible sur la figure, qu'une machine électrique réversible 30 soit associée, au sein du groupe motopropulseur, au moteur thermique 4.

La machine électrique 30, par exemple un alterno-démarreur séparé du volant d'inertie du moteur thermique 4, et dont un arbre rotatif 32 est accouplé via des moyens de transmission 34 à un arbre rotatif 36 du moteur thermique 4, par exemple un vilebrequin, est apte à fonctionner en mode "*moteur*" ou en mode "*génératrice*"*,* sous la supervision d'un calculateur ou boîtier de commande 12.

En mode "*génératrice*"*,* la machine électrique 30 est un alternateur qui fournit un courant électrique destiné à être stocké dans le système de stockage 16 en prélevant un couple électrique Ce résistant ; en mode "*moteur*"*,* la machine électrique 30 est au contraire alimentée par du courant précédemment stocké dans le système de stockage 16 et elle fournit un couple électrique Ce moteur qui s'ajoute au couple Cₜ fourni par le moteur thermique 4 pour être transmis aux roues du véhicule.

Le mode de fonctionnement d'un tel groupe motopropulseur est le suivant : L'enfoncement de la pédale d'accélérateur (non représentée) du véhicule par le conducteur est traduite par un calculateur (non représenté) en une consigne de couple C à transmettre aux roues du véhicule. Le couple C peut alors être obtenu soit sous la forme de couple thermique Cₜ, soit sous la forme de couple électrique Ce, soit sous la forme d'une combinaison des deux. Dans tous les cas, la valeur du couple C est égale à la somme algébrique des valeurs du couple thermique Cₜ et du couple électrique Ce, ce dernier prenant une valeur positive en mode "*moteur*" et une valeur négative en mode "*génératrice*" de la machine électrique 30. La répartition en fonction de différents paramètres du véhicule et/ou groupe motopropulseur est réalisée par le boîtier de commande 12, utilisé ici pour la commande de la machine électrique 30 (mais qui est également utilisé à d'autres fins comme décrit plus bas).

Le boîtier de commande 12 comprend des moyens de surveillance de la charge électrique C_{B} du système de stockage 16. Si le niveau de charge C_{B} est insuffisant, c'est-à-dire inférieur à un seuil minimum de charge C_{Bmin}, par exemple 15% de la charge restante système de stockage, le boîtier de commande 12 interdit que la machine électrique 30 ne soit utilisée en mode "*moteur*"*.* En effet, en-dessous de ce seuil minimum de charge C_{Bmin}, le système de stockage 16 n'est plus à même d'assurer la fonction d'apport de couple de la machine électrique 30, et il y a un risque d'usure prématurée des composants du système de stockage 16. Inversement, si le niveau de charge C_{B} est maximal, c'est-à-dire égal au seuil maximal de charge C_{Bmax}, le boîtier de commande 12 interdit que la machine électrique 30 soit utilisée en mode "*génératrice*"*.*

En variante, on pourrait utiliser différemment l'énergie électrique stockée, récupérée notamment au moyen du système turbogénérateur 1, pour participer à la propulsion. Par exemple, l'énergie électrique stockée dans le système de stockage 16 pourrait être restituée pour alimenter un moteur électrique couplé en rotation avec le vilebrequin du moteur à combustion interne 4.

Dans les situations qui viennent d'être mentionnées où l'on utilise un moteur électrique ou une machine électrique au sein du groupe motopropulseur (en sus du moteur à combustion interne 4), on qualifie généralement le véhicule automobile d'hybride.

On a décrit ci-dessus une solution dans laquelle l'énergie électrique produite par la machine électrique 23 du système turbogénérateur 1 est stockée avant d'être utilisée. On pourrait toutefois prévoir en variante que l'énergie électrique produite par la machine électrique 23 soit utilisée au moment de sa production, par exemple pour contribuer à la propulsion du véhicule automobile comme mentionné ci-dessus.

L'énergie électrique stockée dans le système de stockage 16 peut également être utilisée pour alimenter un compresseur électrique de suralimentation en air du moteur à combustion interne, de préférence dans des phases transitoires de relance de la suralimentation. Le compresseur électrique est par exemple implanté dans la ligne d'admission d'air, entre le filtre à air 20 et les soupapes d'admission du moteur 4, et il est activé dans les phases de démarrage de la turbine 11.

En variante, et dans le même but de relance de la suralimentation, on peut prévoir que l'énergie électrique stockée dans le système de stockage 16 soit réutilisée pour alimenter la machine électrique 23 afin qu'elle entraîne la turbine 22 du système turbogénérateur 1 (fonctionnement inverse de celui décrit ci-dessus) pour accélérer sa rotation, ce qui provoque une aspiration des gaz vers l'aval de la turbine 11 du turbocompresseur 9.

Ceci permet, en particulier dans certaines phases transitoires, d'accélérer la mise en rotation du turbocompresseur 9. Dans le cadre de la variante où un circuit de dérivation 2 du système turbogénérateur 1 est utilisé, on peut prévoit en outre lors de ces phases transitoires de placer la vanne de dérivation 3 en position d'obturation complète du circuit de dérivation 2 afin d'obtenir un effet d'accélération maximum.

Le moteur à combustion interne 4 comporte par ailleurs une ligne d'injection de carburant dans les cylindres. Cette ligne d'injection comporte une pompe d'injection agencée pour prélever le carburant dans un réservoir afin de l'amener sous pression dans un rail de distribution qui débouche dans les cylindres via quatre injecteurs.

Comme le montre la figure 1, on utilise le boîtier de commande déjà mentionné pour piloter les différents organes du moteur à combustion interne 4. Le boîtier de commande 12 comporte un processeur (CPU), une mémoire vive (RAM), une mémoire morte (ROM), des convertisseurs analogiques-numériques (A/D) et des interfaces d'entrée et de sortie.

Grâce à ses interfaces d'entrée, le boîtier de commande 12 est adapté à recevoir de différents capteurs des signaux d'entrée relatifs au fonctionnement du moteur.

Parmi ces capteurs, il est notamment prévu un capteur de pression acoustique dans le circuit de dérivation 2, à l'aval de la vanne de dérivation 3.

Grâce à ce capteur de pression acoustique et à différents autres capteurs, le boîtier de commande 12 mémorise en continu dans sa mémoire vive :
- la charge C instantanée du moteur à combustion interne 4,
- le régime R instantané du moteur à combustion interne 4,
- le bruit au niveau de la ligne d'échappement.

La charge C (également appelée "*charge-moteur*") correspond au rapport du travail fourni par le moteur sur le travail maximal que pourrait développer ce moteur à un régime donné. Elle est généralement approximée à l'aide d'une variable appelée pression moyenne effective PME. Sa valeur dépend en particulier de l'appui exercé par le conducteur sur la pédale d'accélérateur.

Le régime R correspond à la vitesse de rotation du vilebrequin, exprimée en tours par minute.

Grâce à une cartographie prédéterminée sur banc d'essais et mémorisée dans sa mémoire morte (ROM), le boîtier de commande 12 est adapté à générer, pour chaque condition de fonctionnement du moteur (déterminée grâce aux capteurs mentionnés ci-dessus), des signaux de sortie.

Enfin, grâce à ses interfaces de sortie, le boîtier de commande 12 est adapté à transmettre ces signaux de sortie aux différents organes du moteur, notamment à la vanne de dérivation 3.

Ainsi par exemple, dans un premier mode de fonctionnement, le boîtier de commande 12 peut piloter la vanne de dérivation 3 afin de maîtriser le bruit sur la ligne d'échappement, en pratique de telle sorte que le bruit mesuré par le capteur de pression acoustique respecte une consigne mémorisée dans le boîtier de commande 12. Plus la vanne de dérivation 3 est refermée, plus les gaz font tourner rapidement la turbine 22, et plus les pulsations acoustiques des gaz d'échappement sont atténuées à la boucle d'échappement de la ligne 17.En variante, notamment dans des systèmes sans capteur de pression acoustique, il est possible de piloter l'ouverture de la vanne de dérivation 3 en fonction d'une cartographie mémorisée dans le boîtier de commande 12 qui définit par exemple le positionnement du volet interne à la vanne de dérivation 3 en fonction de divers paramètres de fonctionnement du moteur à combustion interne, tels que la charge C et le régime R mentionnés ci-dessus.

Grâce à un tel mode de fonctionnement qui permet une maîtrise des bruits de bouche d'échappement, on peut réduire la taille des pots de détente utilisés dans la ligne d'échappement.

Selon un second mode de fonctionnement envisageable, le boîtier de commande 12 pilote la vanne de dérivation 3 en position d'obturation du circuit de dérivation 2 au moment du démarrage du moteur, par exemple tant qu'un seuil prédéterminé de température moteur n'est pas atteint, de telle sorte la turbine 22 du système turbogénérateur 1 génère une contre-pression importante dans la ligne d'échappement, ce qui oblige le moteur à combustion interne à fonctionner sur des points de charge plus élevés, où plus de chaleur est dégagée à l'échappement.

On accélère ainsi la montée en température du système de post-traitement. On note que la phase de démarrage nécessite une légère surconsommation ; toutefois, du fait que la contre-pression est réalisée par la turbine 22 du système turbogénérateur, cette surconsommation est récupérée sous forme d'énergie électrique.

Une fois cette phase de démarrage terminée, par exemple lorsqu'un seuil de température est atteint, le système de post-traitement fonctionne normalement et le boîtier de commande 12 commande une ouverture au moins partielle de la vanne de dérivation 3 afin d'obtenir mois de contre-pression dans la ligne d'échappement. Le boîtier de commande 12 peut alors sélectionner par ailleurs des réglages d'injection de carburant offrant un meilleur rendement.

On remarque que ce second mode de fonctionnement est éventuellement combiné avec le premier mode de fonctionnement. On prévoit par exemple dans ce cas que la commande de la vanne de dérivation 3 est réalisée conformément au second mode de fonctionnement tant que le bruit mesuré par le capteur de pression acoustique ne dépasse pas la consigne fixée conformément au premier mode de fonctionnement ; en cas de dépassement, la vanne de dérivation 3 est commandée conformément au premier mode de fonctionnement.

## Revendications

1. Ligne d'échappement de gaz brûlés pour moteur (4) à combustion interne comprenant :
- une turbine (11) d'un turbocompresseur (9)
- une turbine (22) d'un système de turbo-récupération (1) disposée à l'aval de la turbine (11) du turbocompresseur (9) dans la ligne d'échappement, et
- un élément de jonction (24) permettant le branchement d'une ligne de recirculation des gaz brûlés et disposé entre la turbine (11) du turbocompresseur (9) et la turbine (22) du système de turbo-récupération (1),
la ligne d'échappement comprenant un dispositif de post-traitement (14) interposé entre la turbine (11) du turbocompresseur (9) et l'élément de jonction (24),
**caractérisée en ce que** le système de turbo-récupération (1) comprend une machine électrique réversible (23).

2. Ligne d'échappement selon la revendication 1, dans laquelle le système de turbo-récupération est un système turbogénérateur (1).

3. Ligne d'échappement selon la revendication 2, dans laquelle le système turbogénérateur (1) est connecté à des moyens de stockage (16) conçus pour stocker l'énergie électrique fournie par le système turbogénérateur (1).

4. Ligne d'échappement selon la revendication 2 ou 3, dans laquelle une machine électrique (30) conçue pour contribuer, dans au moins un mode de fonctionnement de la machine électrique (30), à la propulsion du véhicule est alimentée par l'énergie électrique produite par le système turbogénérateur (1).

5. Ligne d'échappement selon la revendication 2 ou 3, dans laquelle un compresseur électrique est alimenté par l'énergie électrique produite par le système turbogénérateur.

6. Ligne d'échappement selon l'une des revendications 1 à 5, dans laquelle un circuit de dérivation (2) comprenant une vanne (3) est branché en parallèle de la turbine (22) du système de turbo-récupération (1).

7. Moteur à combustion interne comportant :
- un bloc-moteur (4) qui délimite au moins une chambre de combustion,
- une ligne d'admission d'air frais dans chaque chambre de combustion, et
- un circuit d'injection de carburant dans la ligne d'admission ou dans chaque chambre de combustion,
**caractérisé en ce qu'**il comporte en outre une ligne d'échappement des gaz brûlés hors de chaque chambre de combustion selon l'une des revendications 1 à 6, et une ligne de recirculation branchée, d'un côté, audit élément de jonction et, de l'autre côté, à la ligne d'admission.

8. Moteur à combustion interne selon la revendication 7, dans lequel la ligne d'admission comprend un compresseur (13) du turbocompresseur (9).

9. Moteur à combustion interne selon la revendication 7 ou 8, la revendication 7 étant prise dans la dépendance de la revendication 2, dans lequel il est prévu un dispositif électrique alimenté, dans au moins un mode de fonctionnement, par l'énergie électrique produite par le système turbogénérateur (1).

## Patentansprüche

1. Abgasstrang zum Ausstoßen verbrannter Gase für einen Verbrennungsmotor (4), umfassend:
- eine Turbine (11) eines Turboladers (9),
- eine Turbine (22) eines Turbo-Rückgewinnungssystems (1), die stromabwärts der Turbine (11) des Turboladers (9) in dem Abgasstrang angeordnet ist, und
- ein Verbindungselement (24), welches das Anschließen einer Leitung zur Rückführung der verbrannten Gase ermöglicht und zwischen der Turbine (11) des Turboladers (9) und der Turbine (22) des Turbo-Rückgewinnungssystems (1) angeordnet ist,
wobei der Abgasstrang eine Nachbehandlungsvorrichtung (14) umfasst, die zwischen der Turbine (11) des Turboladers (9) und dem Verbindungselement (24) angeordnet ist, **dadurch gekennzeichnet, dass** das Turbo-Rückgewinnungssystem (1) eine reversible elektrische Maschine (23) umfasst.

2. Abgasstrang nach Anspruch 1, wobei das Turbo-Rückgewinnungssystem ein Turbogeneratorsystem (1) ist.

3. Abgasstrang nach Anspruch 2, wobei das Turbogeneratorsystem (1) mit Speichermitteln (16) verbunden ist, die dafür ausgelegt sind, die von dem Turbogeneratorsystem (1) gelieferte elektrische Energie zu speichern.

4. Abgasstrang nach Anspruch 2 oder 3, wobei eine elektrische Maschine (30), die dafür ausgelegt ist, in wenigstens einer Betriebsart der elektrischen Maschine (30) zum Antrieb des Fahrzeugs beizutragen, mit der von dem Turbogeneratorsystem (1) erzeugten elektrischen Energie gespeist wird.

5. Abgasstrang nach Anspruch 2 oder 3, wobei ein elektrischer Kompressor mit der von dem Turbogeneratorsystem erzeugten elektrischen Energie gespeist wird.

6. Abgasstrang nach einem der Ansprüche 1 bis 5, wobei ein Nebenkreis (2), der ein Ventil (3) umfasst, zu der Turbine (22) des Turbo-Rückgewinnungssystems (1) parallel geschaltet ist.

7. Verbrennungsmotor, welcher aufweist:
- einen Motorblock (4), welcher wenigstens einen Verbrennungsraum begrenzt,
- eine Leitung zum Einlass von Frischluft in jeden Verbrennungsraum, und
- einen Kreis zur Einspritzung von Kraftstoff in die Einlassleitung oder in jeden Verbrennungsraum, **dadurch gekennzeichnet, dass** er außerdem einen Abgasstrang zum Ausstoßen der verbrannten Gase aus jedem Verbrennungsraum nach einem der Ansprüche 1 bis 6 und eine Rückführungsleitung, die auf einer Seite an das Verbindungselement und auf der anderen Seite an die Einlassleitung angeschlossen ist, aufweist.

8. Verbrennungsmotor nach Anspruch 7, wobei die Einlassleitung einen Kompressor (13) des Turboladers (9) umfasst.

9. Verbrennungsmotor nach Anspruch 7, wenn dieser von Anspruch 2 abhängig ist, oder nach Anspruch 8, wobei eine elektrische Vorrichtung vorgesehen ist, die in wenigstens einer Betriebsart mit der von dem Turbogeneratorsystem (1) erzeugten elektrischen Energie gespeist wird.

## Claims

1. Burnt gas exhaust line for an internal combustion engine (4) including:
- a turbine (11) of a turbocompressor (9),
- a turbine (22) of a turbo-recovery system (1) disposed on the downstream side of the turbine (11) of the turbocompressor (9) in the exhaust line, and
- a junction element (24) enabling the connection of a burnt gas recirculation line and disposed between the turbine (11) of the turbocompressor (9) and the turbine (22) of the turbo-recovery system (1),
the exhaust line including a post-treatment device (14) disposed between the turbine (11) of the turbocompressor (9) and the junction element (24), **characterized in that** the turbo-recovery system (1) includes a reversible electric machine (23).

2. Exhaust line according to Claim 1, wherein the turbo-recovery system is a turbogenerator system (1).

3. Exhaust line according to Claim 2, wherein the turbogenerator system (1) is connected to storage means (16) designed to store the electrical energy supplied by the turbogenerator system (1).

4. Exhaust line according to Claim 2 or 3, wherein an electric machine (30) designed to contribute, in at least one mode of operation of the electric machine (30), to the propulsion of the vehicle is supplied with the electrical energy produced by the turbogenerator system (1).

5. Exhaust line according to Claim 2 or 3, wherein an electric compressor is supplied with the electrical energy produced by the turbogenerator system.

6. Exhaust line according to any one of Claims 1 to 5, wherein a branch circuit (2) including a valve (3) is connected in parallel with the turbine (22) of the turbo-recovery system (1).

7. Internal combustion engine including:
- an engine block (4) that delimits at least one combustion chamber,
- an inlet line for admission of cool air into each combustion chamber, and
- a circuit for injection of fuel into the inlet line or into each combustion chamber,
**characterized in that** it further includes a line according to any one of Claims 1 to 6 for exhausting burnt gas from each combustion chamber and a recirculation line connected on one side to said junction element and on the other side to the inlet line.

8. Internal combustion engine according to Claim 8, wherein the inlet line includes a compressor (13) of the turbocompressor (9).

9. Internal combustion engine according to Claim 7 or 8, Claim 7 being dependent on Claim 2, including an electrical device supplied, in at least one mode of operation, with the electrical energy produced by the turbogenerator system (1).
